## Europäisches Patentamt
## European Patent Office
## Office européen des brevets

(19)

(11) Numéro de publication: **0 208 612**
**B1**

(12)
# FASCICULE DE BREVET EUROPEEN

(45) Date de publication du fascicule du brevet: **06.06.90**

(51) Int. Cl.⁵: **C 12 M 1/12,** C 12 G 3/08, C 12 G 1/00

(21) Numéro de dépôt: **86401475.8**

(22) Date de dépôt: **03.07.86**

(54) **Procédé d'ajustement du degré alcoolique de vins ou de boissons alcooliques et installation pour sa mise en oeuvre.**

(30) Priorité: **05.07.85 FR 8510316**

(43) Date de publication de la demande:
**14.01.87 Bulletin 87/03**

(45) Mention de la délivrance du brevet:
**06.06.90 Bulletin 90/23**

(84) Etats contractants désignés:
**AT BE CH DE FR GB IT LI LU NL SE**

(56) Documents cités:
**EP-A-0 078 226**
**EP-A-0 089 893**
**BIOTECHNOLOGY & BIOENGINEERING, vol. 27, no. 7, juillet 1985, pages 1081-1084, John Wiley & Sons, New York, US; J.P. CHOUDHURY et al.: "Separation of ethanol from ethanol-water mixture by reverse osmosis"**
**CHEMICAL ABSTRACTS, vol. 100, no. 11, mars 1984, pages 424,425, résumé no. 84147x, Columbus, Ohio, US; M.H.V. MULDER et al.: "Ethanol-water separation by pervaporation", & J. MEMBR. SCI. 1983, 16, 269-84**

(73) Titulaire: **INSTITUT NATIONAL DE RECHERCHE CHIMIQUE APPLIQUEE**
**18 Bis, Boulevard de la Bastille**
**F-75012 Paris (FR)**

(72) Inventeur: **Dick, Richard**
**2, rue Nicolas Houel**
**F-75005 Paris (FR)**
Inventeur: **Moulin, Guy**
**115 Chemin de l'Aire des Masques**
**Montferrier-sur-L/F34980 St.Gely-du-Fesc (FR)**
Inventeur: **Galzy, Pierre**
**1 rue des Mélèzes**
**F-34100 Montpellier (FR)**

(74) Mandataire: **Santarelli, Marc et al**
**Cabinet Rinuy et Santarelli 14, avenue de la Grande Armée**
**F-75017 Paris (FR)**

EP 0 208 612 B1

Courier Press, Leamington Spa, England.

**Description**

La présente invention concerne un procédé d'ajustement du degré alcoolique de vins ou de boissons alcooliques et une installation pour sa mise en oeuvre.

Différents procédés ont déjà été décrits dans la littérature pour traiter à l'aide de membranes d'ultrafiltration ou d'osmose inverse un vin en vue d'élaborer une boisson à degré alcoolique plus bas ou à degré alcoolique plus élevé.

Pour faire une boisson à degré alcoolique plus bas, les procédés connus consistent généralement à diluer convenablement un produit de reconstitution obtenu en rassemblant des produits résultant de fractionnements consécutifs effectués dans l'optique de récupérer dans le produit de départ des éléments considérés comme étant à l'origine des qualités gustatives.

Ainsi, la demande de brevet PCT N° 82 02405 propose de faire une boisson alcoolisée à base degré alcoolique en soumettant une boisson alcoolique naturelle à trois-étapes consécutives de fractionnement physique:

une première ultrafiltration avec une membrane de seuil de coupure de l'ordre de 10.000,

puis une osmose inverse avec une membrane de seuil de coupure de l'ordre de 250 sur le filtrat précédent,

puis une évaporation sous vide du filtrat de la deuxième opération, et enfin de rassembler les concentrats des trois étapes avant de procéder à la dilution convenable.

Le brevet européen N° 78 226 propose de préparer des boissons alcooliques par récupération et valorisation des produits contenus dans les perméats d'opération d'osmose inverse.

Le brevet européen N° 89 893 propose de traiter une boisson alcoolique (principalement de la bière) dans une première opération d'ultrafiltration ou d'osmose inverse puis de soumettre le perméat de cette première opération à un traitement d'osmose inverse sur une membrane imperméable à l'alcool et enfin de rassembler les deux concentrats, puis de diluer à volonté.

On connait par ailleurs un procédé décrit dans le brevet français 2.553.292 permettant de traiter directement un vin par osmose inverse sur une membrane imperméable à l'alcool pour obtenir un vin à degré alcoolique plus élevé que le vin de départ.

Les procédés visant à l'élaboration d'un vin allégé en alcool recourent tous à une étape de dilution par de l'eau, ce qui rend ces procédés inutilisables dans bon nombre de pays ou la législation s'y oppose. C'est dans cette optique que le brevet européen N° 78 226 propose de faire cette dilution avec un perméat intermédiaire.

Il n'en reste pas moins que tous les procédés permettant d'obtenir à partir d'une boisson alcoolisée une boisson soit allégée, soit plus concentrée en alcool se font tous avec perte d'une partie plus ou moins intéressante de la matière première.

En outre, les nécessités de la commercialisation des vins et autres boissons alcooliques conduisent à effectuer des coupages dans le but d'ajuster leur degré alcoolique: ces mélanges sont décriés car ils font souvent perdre leur originalité aux produits.

La présente invention propose, elle, un procédé de valorisation d'un vin quelconque permettant de faire, simultanément, sans perte de matière première, un vin allégé et un vin enrichi en alcool qui ont gardé l'un et l'autre des qualités analytiques (mis à part la concentration en éthanol) et organoleptiques très proches de celles du produit de départ.

Ce procédé, qui consiste essentiellement à réaliser un transfert direct d'éthanol d'une boisson fermentée vers une autre, ne comporte aucun ajout d'eau extérieure et permet en outre de respecter la législation de certains pays qui interdisent de tels ajouts.

De façon plus particulière, l'objectif de la présente invention est de permettre un ajustement couplé des teneurs en éthanol de deux boissons alcooliques de manière que l'une voit son degré alcoolique diminuer, alors que l'autre le voit augmenter et que les teneurs de tous les autres constituants de des deux boissons soient pratiquement inchangées dans le produit final. De plus, l'invention peut s'appliquer soit à deux produits différents, soit à un seul produit qui sera pour partie concentré en éthanol et pour partie désalcoolisé. Bien entendu, si besoin est, on pourra avoir recours à toutes les techniques classiques de traitement supplémentaire du produit (collage, filtration, microfiltration, pasteurisation, traitement au froid, etc...) en fonction de données spécifiques et en conformité avec les législations existantes.

La production de vins à faible degré alcoolique est souhaitée par de nombreux nutritionnistes, les liques anti-alcooliques, mais aussi par de nombreux consommateurs et par les professionnels de l'industrie et du commerce des vins. L'un des objectifs de l'invention est d'obtenir un tel produit conservant toutes les caractéristiques d'un vin mais appauvri en éthanol. Ce produit pourrait constituer la base nécessaire à l'élaboration de boissons nouvelles. L'autre objectif est l'élévation et l'ajustement du degré alcoolique d'un vin ou d'une boisson alcoolique. Un tel système devrait permettre d'ajuster le degré alcoolique des vins au degré souhaité pour leur commercialisation. Il pourrait permettre de corriger, certaines années, la faiblesse naturelle d'un vin en éthanol liée aux aléas climatiques. Le but de la présente invention est de réaliser ces deux objectifs conjointement afin de respecter les législations de chaque pays. Il est également possible de faire conjointement des ajustements de degré alcoolique entre divers vins en fonction des besoins et d'obtenir des boissons de composition identique à celle d'un vin loyal et marchand, exception faite de leur degré alcoolique.

# EP 0 208 612 B1

Certaines législations interdisent l'addition d'eau à tout moment au cours de la fabrication de ces produits. Il convient donc de prévoir des circuits de fabrication "fermés" où ne rentre pas d'eau et d'où sortent séparément le vin à faible degré alcoolique et le vin concentré en éthanol. C'est là le but recherché par la présente invention. Elle s'applique parfaitement au cas de la production de vins à faible degré alcoolique mais elle est également applicable à la réduction du degré alcoolique de toute boisson fermentée, en particulier chaque fois que la législation interdit l'utilisation d'eau.

Le procédé selon l'invention est donc caractérisé par le fait qu'il consiste à faire appel à deux systèmes d'osmose inverse couplés, équipés l'un d'un réservoir d'alimentation en produit à traiter et d'au moins une cellule munie d'au moins une membrane présentant une certaine perméabilité à l'éthanol directement alimentée par ledit produit à traiter et désignée ci-après par "I" et l'autre équipé d'un réservoir d'alimentation du produit à traiter et d'au moins une cellule munie d'au moins une membrane présentant une perméabilité à l'éthanol nettement supérieure et désignée ci-après "P" à soutirer le perméat provenant de ladite cellule P, et à renvoyer ce perméat dans ledit réservoir d'alimentation situé en amont de ladite cellule I, à soutirer le perméat provenant de ladite cellule I et à renvoyer ce perméat dans le réservoir d'alimentation situé en amont de la cellule P tout en récupérant les concentrats X et Y correspondants.

En procédant de la sorte, il s'établit un équilibre entre les deux systèmes qui permettent un enrichissement en éthanol du concentrat sortant de la cellule I et un appauvrissement en éthanol du concentrat sortant de la cellule P.

Suivant d'autres caractéristiques:

la cellule I est munie d'au moins une membrane imperméable ou peu perméable à l'éthanol et la cellule P est munie d'au moins une membrance perméable à l'éthanol;

de façon encore plus avantageuse, la membrane de la cellule P est choisie parmi celles présentant un taux de rejet de l'éthanol inférieur à 10% sous une pression supérieure ou égale à 10 bars pour une solution aqueuse d'éthanol de 2 à 3%, alors que la membrane de la cellule I est avantageusement choisie parmi les membranes présentant des taux de rejet d'éthanol supérieurs à 50% sous une pression allant de 50 à 60 bars pour une solution aqueuse d'éthanol de 2 à 3%, telles que celles décrites dans le brevet français N° 2.286,850;

le produit à traiter dans chacun des deux systèmes d'osmose inverse est le même dans chacun des réservoirs d'alimentation ou bien chacun de ces réservoirs renferme un produit différent;

le débit dans les deux cellules I et P est réglé, en fonction du débit des membranes utilisées et de leur surface, de manière à assurer les variations de degré alcoolique souhaité dans les deux cas, sans qu'il y ait perte ou addition d'eau ou d'alcool.

D'autres caractéristiques et les avantages de l'invention ressortiront plus clairement de la description qui va suivre, faite en regard des dessins annexés sur lesquels:

la figure 1 illustre un schéma suivant lequel l'invention est mise en oeuvre avec un seul produit de départ à traiter; et

la figure 2 illustre une mise en oeuvre du procédé de l'invention avec des produits de départ différents.

En se référant à ces dessins, on a désigné:

par A, $A_1$ et $A_2$ les réservoirs de stockage et d'alimentation du ou des produits à traiter;

par B, $B_1$, les cuves dits de régulation;

par P une cellule d'osmose inverse comportant au moins une membrane perméable à l'éthanol; et

par I une cellule d'osmose inverse comportant au moins une membrane imperméable ou peu perméable à l'éthanol.

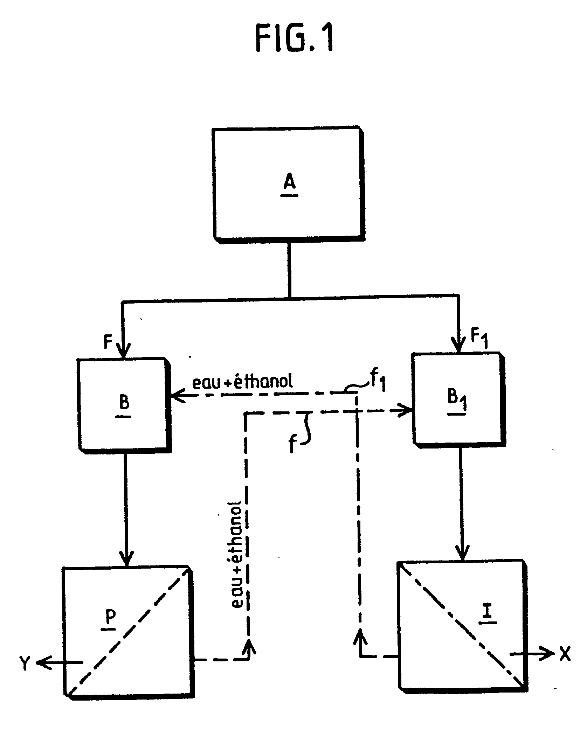

Il est tout d'abord à noter qu'en se référant à la figure 1, le produit provenant du réservoir A alimente chacune des cuves de régulation B, $B_1$, pour être introduit, dans le sens des flèches F, $F_1$ d'une part dans la cellule P et d'autre part dans la cellule I.

On a représenté sur ce schéma au moyen de la flèche en tiretés $f$, le courant sortant de la cellule P. Ce courant est admis en $B_1$ en amont de la cellule I alors que le courant issue de cette même cellule I, représenté par la flèche en points et tirets $f_1$ est admis dans la cuve B en amont de la cellule P.

Les deux produits X et Y sortant directement des cellules P et I constituent les produits désirés.

Le transfert du perméat doit assurer des échanges d'eau correspondant à des volumes sensiblement égaux dans les deux sens.

Dans le sens I vers P, le liquide contient de l'éthanol à une très faible concentration qui dépend des débits souhaités et des écarts de titre alcoolique recherchés. Dans le sens P vers I, le titre alcoolique est sensiblement égal à celui du vin traité à la sortie du système P. Cette différece de degré alcoolique assure le transfert d'éthanol du système P au système I.

Le réglage des débits relatifs dans I et dans P et le choix des surfaces des membranes des deux cellules permettent d'imposer les écarts de degré alcoolique souhaités dans les deux systèmes: augmentation dans I et baisse dans P.

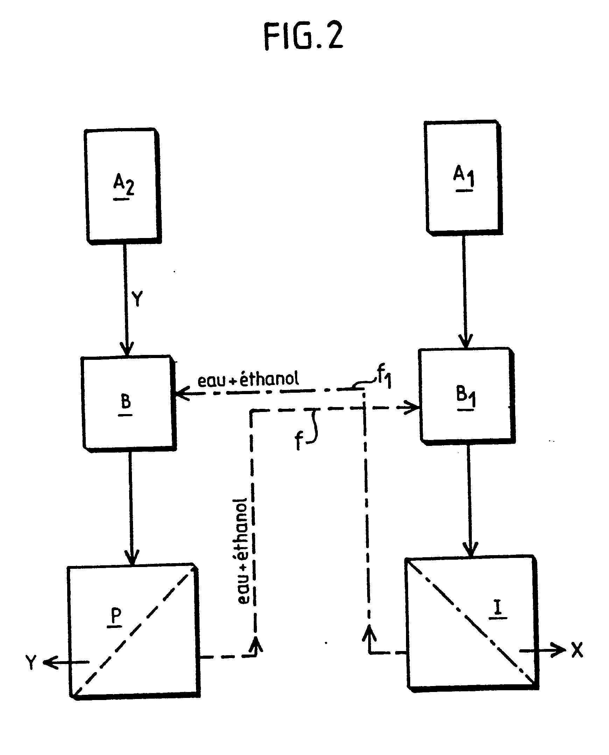

En se référant à la figure 2, les produits à traiter $A_1$ et $A_2$ sont introduits dans les systèmes comme précédemment.

Les exemples suivants donnés à titre illustratif et nullement limitatif de l'invention feront mieux ressortir la portée et l'intérêt de celle-ci.

**Exemple 1**

Un vin rouge titrant 10% v/v est traité suivant la figure 1, de manière à obtenir d'une part un vin titrant 12% v/v et d'autre part un produit titrant 6% v/v.

Un hectolitre de produit est mis en oeuvre, soit 1000° d'alcool. En raissonnant en degré alcoolique, on a:

$$10Y-6Y=12X-10X,$$

soit X=2Y.

Or X+Y=100, d'où:

$$Y=X/2=33,3 \text{ litres et } X=66,6 \text{ litres.}$$

**Exemple 2**

Un vin rouge titrant 11% v/v est ajusté à 12% v/v et un vin rouge titrant 10% v/v est désalcoolisé jusqu'à 6% v/v.

Selon l'équation précédente:

$$10Y-6Y=12X-11X$$

soit 4Y=X.

Pour ajuster un hectolitre de vin de 10° à 6°, il faudra en ajuster 4 hectolitres de 11 à 12°.

**Exemple 3**

Un vin rouge titrant 12% v/v est traité suivant la figure 1, de manière à obtenir un vin titrant 14% v/v et un vin titrant 7% v/v.

Pour un hectolitre de produit mis en oeuvre, on a 71,142 litres de vin concentré et 28,858 litres de vin désalcoolisé.

A titre d'exemple, le tableau 1 ci-après donne pour ce cas l'analyse du vin de départ, des vins allégés, alcoolisés obtenus et des liquides qui circulent de I vers P et de P vers I. Il convient de noter que, si les modifications directes des autres éléments que l'éthanol sont faibles ou nulles, des modifications indirectes se produisent. En particulier, la concentration plus élevée en éthanol dans le vin alcoolisé provoquera des précipitations progressives de bitartrate de potassium au cours de la garde et des traitements au froid. On ne donne pas les acidités totale et volatile, les teneurs en sodium et en potassium, les teneurs en acides organiques: ces valeurs varieront au cours de la garde et des traitements. Il faut noter qu'une partie de l'acide volatil passe de P vers I et non de I vers P; il en résulte donc une très légère augmentation d'acidité volatile du vin alcoolisé et une baisse d'acidité volatile du vin allégé. De même, les acides lactique et succinique ont tendance à passer toujours très faiblement mais un peu plus de P vers I que de I vers P.

**TABLEAU 1**

|  | Vin de départ | Perméat de I→P | Perméat: de P→I | Vin: allégé | Vin alcoolisé |
|---|---|---|---|---|---|
| Titre alcoométrique | 12 | 2 | 7,5 | 7 | 14 |
| Densité 20/20 | 0,99 | — | — | 0,99 | 0,99 |
| Sucres | 2 | — | — | 2 | 2 |
| Indices de polyphénols | 30 | 0 | 1 | 28 | 30 |
| Anthocyanes g/l | 0,130 | 0 | 0 | 0,130 | 0,130 |
| pH | 3,6 | — | — | 3,6 | 3,6 |

**Exemple 4**

Le vin de table utilisé correspond à la composition analytique donnée dans la première colonne du tableau 2. Il est soumis à un traitement selon le schéma de la figure 1. L'osmoseur P est équipé de membranes perméables à l'éthanol du type vendu sur le marché sous l'appellation "DDS ALCO 95". L'osmoseur I est équipé avec des membranes permettant à rétention d'éthanol du type de celles du brevet N° 2.286.850.

Selon la figure 1, les perméats vont respectivement de P vers I et réciproquement de I vers P.

La perte d'éthanol en P permet l'obtention d'un vin de degré alcoolique réduit (7,1°), le transfert de cet alcool de P en I permet l'enrichissement en éthanol du vin à la sortie de I (11,5°). L'analyse des deux vins obtenus est donnée dans le tableau 2 (colonnes II et III). Les pressions exercées sont de 45 bars dans l'osmoseur P et 80 bars dans l'osmoseur I.

Les vins obtenus (colonnes II et III du tableau 3 ci-après) sont d'excellente qualité. Le vin allégé, de même que le vin enrichi en éthanol, ont gardé pour les autres élements des compositions très proches de celles du produit de départ. Les produits obtenus ont la composition d'un vin normal, modification de la composition en éthanol exceptée. Ces produits sont ainsi d'excellence qualité.

L'augmentation du degré alcoolique entraîne, après le traitement, une précipitation de bitartrate de potassium qui améliore l'équilibre organoleptique du vin sans variation notable du pH.

Exemple 5

Le vin utilisé dans ce traitement a été obtenu par vinification exclusive du cépage Syrath. Sa composition est donnée dans le tableau 3 ci-après (colonne I). Les modalités expérimentales sont les mêmes que dans l'expérience précédente. Le transfert d'éthanol de P en I a permis d'obtenir un vin titrant 6,85° et un vin titrant 12,85°. Ici encore, la concentration en éthanol entraîne une précipitation ultérieure du tartre, sans que cela gêne nullement le déroulement du traitement. Les analyses des vins obtenus sont données dans le tableau 3 (colonnes II et III).

Les mêmes conclusion sont tirées que dans l'exemple précédent concernant l'analyse des vins allégés et concentrés en alcool et leur qualité.

Exemple 6

Le vin de table utilisé a été traité d'une part par un osmoseur (85 bars) muni de membranes selon le brevet N° 2.286.850 pour la rétention d'éthanol et d'autre part, par un osmoseur (45 bars) équipé de membranes vendues sur le marché sous l'appellation "DDS CAP". Le schéma de la figure 1 est toujours respecté. Dans ce cas, on a délibérément choisi d'effectuer une très légère augmentation de la teneur en éthanol à la sortie de I. A la sortie de P, on a obtenu un vin de 6,9° d'excellente qualité.

La membrane CAP permet une vitesse de traitement plus rapide que les membranes ALCO. Cependant, la qualité des produits obtenus est peut-être très légèrement moins bonne.

Exemple 7

En utilisant un vin de table et en procédant dans les conditions soit de l'exemple 4, soit de l'exemple 6, on a préparé des vins titrant 4° en éthanol.

Dans les deux cas, ces vins présentent un goût tannique un peu trop prononcé. Une vinification particulière en amont ou des traitements (collage, filtration, etc) en aval paraissent indispensables.

# EP 0 208 612 B1

TABLEAU 2

|  | I | II | III |
|---|---|---|---|
| Degré alcoolique % (v/v) | 10 | 7,1 | 11,5 |
| Indice de polyphénol | 22,5 | 21,0 | 20,0 |
| Anthocyane (g/l) | 0,158 | 0,133 | 0,136 |
| Rapport indice de Folin/ anthocyane | 142 | 157 | 150 |
| Acidité totale en acide sulfurique (g/l) | 4,10 | 3,77 | 4,09 |
| Acidité totale en acide tartrique (g/l) | 6,27 | 5,76 | 6,25 |
| Acidité volatile (g/l) | 0,28 | 0,27 | 0,35 |
| Acidité fixe (g/l) | 3,52 | 3,50 | 3,74 |
| Potassium (g/l) | 0,81 | 0,78 | 0,86 |
| Couleur (intensité D520+D420) | 3,60 | 2,82 | 3,65 |
| pH | 3,40 | 3,40 | 3,45 |
| Acide malique (g/l) | 0,47 | 0,52 | 0,66 |
| Acide tartrique (g/l) | 2,32 | 2,04 | 1,92 |
| Acide citrique (g/l) | 0,15 | 0,14 | 0,18 |
| Acide lactique (g/l) | 2,66 | 2,48 | 2,48 |
| Acide succinique (g/l) | 0,45 | 0,46 | 0,53 |
| Aldéhyde (mg/l éthanal) | 44,0 | 63,4 | 56,3 |
| Esters (mg/l acétate d'éthyle) | 15,0 | 4,0 | 4,5 |
| Méthanol (mg/l) | 172 | 95 | 110 |
| Alcools supérieurs (mg/l) | 363 | 289 | 235 |
| —butanol-2 (mg/l) | 3,6 | 2,7 | 4,9 |
| —propanol (mg/l) | 29 | 22 | 19 |
| —isobutanol (mg/l) | 78 | 61 | 43 |
| —N-butanol (mg/l) | 2,7 | — | — |
| —isopentanol (mg/l) | 250 | 203 | 168 |

I=vin d'origine
II=vin allégé
III=vin concentré

6

TABLEAU 3

| | I | II | III |
|---|---|---|---|
| Degré alcoolique % (v/v) | 11,65 | 6,85 | 12,85 |
| Indice de polyphénol | 30,0 | 27,0 | 33,0 |
| Anthocyane (g/l) | 0,22 | 0,177 | 0,20 |
| Rapport indice de Folin/ anthocyane | 136 | 152 | 165 |
| Acidité totale en acide sulfurique (g/l) | 4,02 | 3,53 | 4,31 |
| Acidité totale en acide tartrique (g/l) | 6,15 | 5,40 | 6,59 |
| Acidité volatile (g/l) | 0,35 | 0,37 | 0,35 |
| Acidité fixe (g/l) | 3,67 | 3,16 | 3,96 |
| Potassium (g/l) | 0,88 | 0,74 | 0,94 |
| Couleur (intensité D520+D420) | 5,62 | 5,74 | 7,05 |
| pH | 3,48 | 3,40 | 3,50 |
| Acide malique (g/l) | 0,24 | 0,22 | 0,26 |
| Acide tartrique (g/l) | 2,16 | 1,68 | 2,14 |
| Acide citrique (g/l) | 0,13 | 0,12 | 0,14 |
| Acide lactique (g/l) | 3,2 | 2,68 | 3,4 |
| Acide succinique (g/l) | 0,43 | 0,33 | 0,37 |
| Aldéhyde (mg/l éthanal) | 51,0 | 54,5 | 49,3 |
| Esters (mg/l acétate d'éthyle) | 12,0 | 5,5 | 4,5 |
| Méthanol (mg/l) | 108 | 120 | 69 |
| Alcools supérieurs (mg/l) | 271 | 300 | 396 |
| —butanol-2 (mg/l) | 5,5 | 1,6 | 0 |
| —propanol (mg/l) | 18 | 18 | 13 |
| —isobutanol (mg/l) | 57 | 62 | 57 |
| —N-butanol (mg/l) | — | 3,0 | 1,5 |
| —isopentanol (mg/l) | 191 | 216 | 325 |

I=vin d'origine
II=vin allégé
III=vin concentré.

Il va de soi que la présente invention n'a été décrite qu'à titre purement explicatif et nullement limitatif et que toute modification, notamment au niveau des équivalences techniques, pourra y être apportée, sans sortir de son cadre.

**Revendications**

1. Procédé d'ajustement du degré alcoolique de vins ou de boissons alcooliques, caractérisé en ce qu'il consiste à faire appel à deux systèmes d'osmose inverse couplés, comprenant chacun un réservoir d'alimentation en produit à traiter en amont d'une cellule d'osmose inverse, à équiper les deux cellules d'osmose inverse P et I de membranes de perméabilité à l'éthanol nettement différente, à soutirer le perméat provenant de ladite cellule P, à le renvoyer dans ledit réservoir d'alimentation en amont de ladite cellule I, à soutirer le perméat provenant de ladite cellule I et à le renvoyer dans le réservoir d'alimentation en amont de la cellule P, tout en récupérant les concentrats (X et Y) correspondants.

2. Procédé selon la revendication 1, caractérisé en ce que la cellule P est équipée d'au moins une membrane perméable à l'éthanol et la cellule I d'au moins une membrane imperméable ou peu perméable à l'éthanol.

3. Procédé selon la revendication 1 ou 2, caractérisé en ce que la membrane imperméable ou peu perméable à l'éthanol présente un taux de rejet d'éthanol supérieur à 50% sous une pression allant de 50 à 60 bars pour une solution aqueuse d'éthanol de 2 à 3%.

4. Procédé selon la revendication 2, caractérisé en ce que la membrane perméable à l'éthanol présente un taux de rejet de l'éthanol inférieur à 10% sous une pression supérieure ou égale à 10 bars pour une solution aqueuse d'éthanol de 2 à 3%.

5. Procédé selon l'une des revendications 1 à 4, caractérisé en ce que le produit à traiter dans chacun des deux systèmes d'osmose inverse est le même dans chacun des réservoirs d'alimentation ou bien chacun de ces réservoirs renferme un produit différent.

6. Procédé selon l'une des revendications 1 à 5, caractérisé en ce que le débit dans les deux cellules (I) et (P) est réglé en fonction du débit des membranes utilisées et de leur surface, de manière à assurer les variations de degré alcoolique souhaitées dans les deux cas, sans qu'il y ait perte ou addition d'eau ou d'alcool.

7. Installation pour la mise en oeuvre du procédé selon l'une quelconque des revendications 1 à 6, caractérisée en ce qu'elle comporte au moins une cuve de stockage (A) directement reliée à au moins deux systèmes d'osmose inverse (P, I) avec des cuves de régulation intermédiaire (B, $B_1$) et des conduites f et $f_1$ reliant respectivement la cellule d'osmose inverse (P) à la cuve ($B_1$) en amont de la cellule (I) et la cellule (I) à la cuve (B) en amont de la cellule (P).

8. Produits obtenus par application du procédé selon l'une des revendications 1 à 6 à au moins un vin naturel, caractérisés en ce qu'ils ont une composition identique à celle d'un vin loyal et marchand à l'exception du pourcentage d'alcool.

**Patentansprüche**

1. Verfahren zum Einstellen des Alkoholgrades von Weinen oder alkoholischen Getränken, dadurch gekennzeichnet, daß man zwei gekuppelte Systeme der umgekehrten Osmose verwendet, die jeweils einen Behälter zum Zuführen des zu behandelnden Produktes oberhalb einer Zelle der umgekehrten Osmose umfassen, die beiden Zellen der umgekehrten Osmose P und I mit Membranen mit einer deutlich unterschiedlichen Permabilität für Äthanol versieht, das von der Zelle P stammande Permeat abzieht und in den Zufuhrbehälter oberhalb der Zelle I rückführt und das von der Zelle I stammende Permeat abzieht und in den Zufuhrbehälter oberhalb der Zelle P rückführt, während die entsprechenden Konzentrate (X und Y) gewonnen werden.

2. Verfahren nach Anspruch 1, dadurch gekennzeichnet, daß die Zelle P mit mindestens einer für Äthanol durchlässigen Membran und die Zelle I mit mindestens einer für Äthanol undurchlässigen oder wenig durchlässigen Membran versehen wird.

3. Verfahren nach Anspruch 1 oder 2, dadurch gekennzeichnet, daß die für Äthanol undurchlässige oder wenig durchlässige Membran einen Rückhaltegrad für Äthanol von mehr als 50% unter einem Druck von 50 bis 60 bar für eine wässerige 2 bis 3 %ige Äthanollösung aufweist.

4. Verfahren nach Anspruch 2, dadurch gekennzeichnet, daß die für Äthanol durchlässige Membran einen Rückhaltegrad für Äthanol von weniger als 10% unter einem Druck von höher als oder gleich 10 bar für eine wässerige 2 bis 3 %ige Äthanollösung aufweist.

5. Verfahren nach einem der Ansprüche 1 bis 4, dadurch gekennzeichnet, daß das in jedem der beiden Systeme der umgekehrten Osmose zu behandelnde Produkt in jedem der Zufuhrbehälter das gleiche ist oder jeder dieser Behälter ein anderes Produkt enthält.

6. Verfahren nach einem der Ansprüche 1 bis 5, dadurch gekennzeichnet, daß der Durchsatz in den beiden Zellen (I) und (P) als Funktion des Durchsatzes der verwendeten Membranen und deren Oberfläche reguliert wird, um die gewünschten Änderungen des Alkoholgrades in beiden Fällen zu gewährleisten, ohne daß es einen Verlust oder Zusatz von Wasser oder Alkohol gibt.

7. Vorrichtung zur Durchführung des Verfahrens nach einem der Ansprüche 1 bis 6, dadurch gekennzeichnet, daß sie mindestens einen Lagerbehälter (A) aufweist, der direkt mit mindestens zwei Systemen der umgekehrten Osmose (P, I) mit Zwischenregulierbehältern (B, $B_1$) verbunden ist, und Leitungen f und $f_1$ die Zelle der umgekehrten Osmose (P) mit dem Behälter ($B_1$) oberhalb der Zelle (I) bzw. die Zelle (I) mit dem Behälter (B) oberhalb der Zelle (P) verbinden.

8. Produkte, erhalten durch Anwendung des Verfahrens nach einem der Ansprüche 1 bis 6 auf mindestens einen Naturwein, dadurch gekennzeichnet, daß sie eine identische Zusammensetzung aufweisen wie jene eines Weines von guter Qualität ausgenommen des Alkoholprozentsatzes.

**Claims**

1. A process for adjusting the alcoholic degree of wines or alcoholic beverages characterized in that it consists of making use of two coupled reverse osmosis systems, each comprising a reservoir for supplying the product to be treated upstream from a reverse osmosis cell, equipping the two reverse osmosis cells P and I with membranes with distinctly different ethanol permeabilities, withdrawing the permeate arising from said cell P, sending it into said reservoir upstream from said cell I, withdrawing the permeate arising from said cell I and sending it into the reservoir upstream from cell P, whilst recovering the corresponding concentrates (X and Y).

2. A process according to Claim 1, characterized in that cell P is equipped with at least one membrane permeable to ethanol and cell I with at least one membrane impermeable or of low permeability to ethanol.

3. A process according to Claim 1 or 2, characterized in that the membrane impermeable or of low permeability to ethanol presents a rate of rejection of ethanol greater than 50% at a pressure ranging from 50 to 60 bars for an aqueous solution of ethanol of 2 to 3%.

4. A process according to Claim 2 characterized in that the membrane permeable to ethanol presents a rate of rejection of ethanol lower than 10% at a pressure greater than or equal to 10 bars for an aqueous solution of ethanol of 2 to 3%.

5. A process according to any one of Claims 1 to 4, characterized in that the product to be treated in each of the two reverse osmosis systems is the same in each of the reservoirs or each of these reservoirs encloses a different product.

6. A process according to any one of Claims 1 to 5 characterized in that the flow in the two cells (I) and (P) is regulated as a function of the flow of the membranes used and their surface area, so as to ensure the variations in the alcoholic degree desired in the two cases, without any loss or addition of water or alcohol occurring.

7. An installation for the implementation of the process in accordance with any one of Claims 1 to 6 characterized in that it comprises at least one storage tank (A) directly connected to at least two reverse osmosis systems (P, I) with intermediate regulation tanks (B, B₁) and conduits f and f₁, respectively connecting the reverse osmosis cell (P) to the tank (B₁) upstream from cell (I), and cell (I) to tank (B) upstream from cell (P).

8. Products obtained by application of the process according to any of Claims 1 to 6 to at least one natural wine characterized in that they have a composition identical to that of an unadulterated merchantable wine except for the percentage of alcohol.

# FIG.1

# FIG.2